# EUROPEAN PATENT APPLICATION

(11) **EP 3 754 417 A1**
(43) Date of publication of application: **23.12.2020**
(21) Application number: 19181327.8
(22) Date of filing: 19.06.2019
(51) Int. Cl.: G02C 9/04

(54) **EYEWEAR WITH LENS CHANGE SYSTEM**

(71) Applicant: Assos of Switzerland GmbH, 6854 San Pietro di Stabio (CH)
(72) Inventor: MAIER, Roger, 6914 Carona (CH)
(74) Representative: M. Zardi & Co S.A.

(57) **Abstract**

Eyewear (1) with a lens change system comprising a lens (2) with a coupling and uncoupling system between the lens (2) and a frame element in which the frame element (31) comprises a slot (32) adapted to house a coupling portion (20) of the lens and a quick coupling and uncoupling pushbutton (33) contrasted by an inner spring (57), the button being associated with a coupling element (53) that axially engages or disengages the coupling portion (20) of the lens (2) inside the slot (32).

## Description

### Field of the invention

The present invention relates to eyewear with a rapid lens change system.

### Prior art

Lens change systems of the prior art are essentially based on joints between the lens and the frame and have some disadvantages: they are sometimes uncomfortable to operate; they weaken the structure of the eyewear and, with use, they can cause failures; they are relatively bulky and have an aesthetic impact that compromises the clean line of the eyewear itself. These defects are even more apparent in the field of eyewear for sports designed to provide high performance, e.g. to be worn while practising a sport such as in particular cycling. The lens change may be required for example to adapt the eyewear to different climates or conditions of use and, therefore, a quick and reliable change system is needed.

### Summary of the invention

The aim of the present invention is to solve the drawbacks of lens change systems of the prior art. The invention aims to provide eyewear with a lens change system that is particularly quick to activate both in the coupling and uncoupling manoeuvre; that is intuitive and easy to use; that does not subject the lens and/or the arms to structural stress; having a small size and that can be realized substantially without altering the design of the eyewear.

The aims are reached with eyewear according to the claims.

The lens has a coupling portion and a frame element comprises a slot adapted to house the coupling portion of the lens. The frame element further comprises a pushbutton operable by pushing or releasing along a defined axis (pushbutton activation axis) between a first position termed coupling position and a second position termed uncoupling position. The pushbutton is associated with an elastic contrast element tending to keep the pushbutton in the coupling position.

A lens coupling element is fixed to the pushbutton, such as for example a stop element. Said coupling element is at least partly within the slot and is configured to engage the coupling portion of the lens with a shape coupling.

The pushbutton acts on the coupling element moving the coupling element along said axis and in such a way that: when the pushbutton is in the first position the coupling element is engaged with the coupling portion, inside the slot, and retains the lens; when the pushbutton is in the second position, the coupling element is disengaged from the coupling portion of the lens and the lens can be separated from the frame element.

Some preferred features are recited in the dependent claims.

The coupling portion of the lens and the coupling element integral with the pushbutton preferably form a male-female coupling. Advantageously, the coupling portion of the lens forms a female seat that can be engaged and disengaged by the coupling element through the axial movement of the coupling element imparted by the pushbutton. The term axial movement denotes a movement along the activation axis of the pushbutton. Said axis is the axis along which the pushbutton moves with respect to the arm when it is pushed or released.

The shape coupling between the coupling element and the coupling portion of the lens is advantageously a free coupling in the direction of the activation axis of the pushbutton, i.e. such as to enable a displacement between said two elements in this direction; the coupling is instead blocked (such as to prevent a relative displacement) in directions that lie on a plane perpendicular to said axis, and in particular in a direction of insertion or extraction of the lens into or out of the slot.

Preferably the coupling portion of the lens has a shape that defines an undercut with respect to a direction of insertion or extraction of the lens into or out of the slot. For example, the coupling portion of the lens can have one of the following shapes: an omega shape, a V shape, a dovetail shape, or equivalent.

Due to the effect of the undercut shape, the coupling element of the pushbutton can have at least one surface that, in the engaged condition, rests on a surface of the coupling portion of the lens, so as to prevent the extraction of the lens itself from the slot and in this way to maintain the desired coupling with the arm. Advantageously, the coupling element has a shape corresponding or conjugate to the shape of the coupling portion of the lens.

The coupling element can be received in a seat obtained in the body of the frame element, on the opposite side to the pushbutton. More in particular, the coupling element is received in said seat with a shape coupling that, similar to the coupling described above, allows axial movement while preventing movement in the directions on a plane perpendicular to the axis. Preferably, the coupling element remains at least partially engaged in said seat both in the coupling position and in the uncoupling position of the pushbutton. An advantage of this feature is given by rest on two opposite surfaces of the frame element and uniform distribution of the mechanical stress.

In a preferred embodiment the pushbutton comprises a head and a stem and the coupling element is fixed to the stem. Preferably, the stem is hollow and the coupling element is fixed to the stem by means of a screw that engages an internal thread of the stem itself.

The assembly comprising the pushbutton and the coupling element essentially has a piston movement along the activation axis, between the engagement and disengagement positions with the lens.

The mentioned elastic contrast element maintains the pushbutton (and the coupling element) normally in the engaged position. To disengage the arm it is therefore necessary to press the pushbutton, overcoming the resistance of the elastic element. Preferably said at least one elastic element comprises, or is represented by, a helical spring. Said helical spring can be housed in the frame element. For example in a preferred embodiment said helical spring is compressed between the head of the pushbutton and an abutment plane inside the frame element, said abutment plane having a central hole through which the stem of the pushbutton itself passes.

The lens is preferably a single lens and comprises two coupling portions right and left respectively for two arms. The lens, or each lens in the case of two separate lenses, can be made in a single piece comprising the aforementioned coupling portions.

In a particularly preferred embodiment the frame element is represented by a front element hinged to an arm. The lens housing slot, the pushbutton and the coupling element are mounted in said front element and substantially form a quick coupling and uncoupling mechanism integrated into the front element. An advantage of localizing the mechanism in the front element is that variants of the front element and/or of the arm can be combined to create different models.

The pushbutton has preferably an elliptical or essentially elliptical shape which facilitates the operation.

The invention has the following advantages: the coupling and uncoupling system has a small size and is entirely contained in the frame element, for example in the mentioned front element; it can be made with a flush assembly that does not alter the line of the eyewear. Thanks to the shape coupling with the lens, which is engaged or released from the axial movement of the pushbutton, the coupling and uncoupling system does not stress or wear out the structure; further, it does not create weak points that could fail with use. The assembly comprising the pushbutton and the locking element uniformly distributes any stress on the structure of the arm. Therefore, a quick change system is obtained which is reliable and long-lasting over time and supports a large number of lens change operations. Another advantage is the speed and rapidity of operatio which is particularly appreciated in a sports setting.

The features and advantages of the invention will become even clearer with the aid of the following description which refers to a preferred embodiment.

### Description of the figures

Fig. 1 shows an eyewear according to an embodiment of the invention, in a front view.
Fig. 2 shows the eyewear of Fig. 1 in a rear view.
Fig. 3 shows the eyewear of Fig. 1 in a side view.
Fig. 4 shows the lens of the eyewear of Fig. 1 in a side view.
Fig. 5 is a detail of the lens of Fig. 4.
Fig. 6 is a section of the lens coupling and uncoupling system of the eyewear of Fig. 1.
Fig. 7 is another section of the lens coupling and uncoupling system.

### Description of a preferred embodiment

The figures show an eyewear 1 comprising a single lens 2 and arms 3, 4. Each of the arms 3, 4 comprises more in detail an elongated body 30, 40 and a front element 31, 41. The front element is in the front part of the arm and is hinged to the body 30 or 40 so as to allow the folding of the arms.

Each of the front elements 31, 41 integrates a system for quick coupling and uncoupling of the lens 2. Said system will be described with reference to the arm 3; the other arm 4 comprises an identical system.

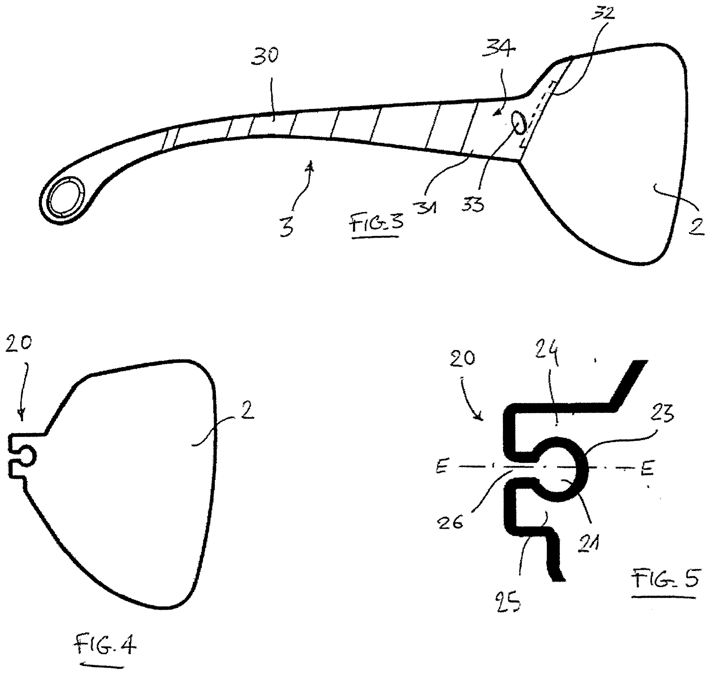

The lens 2 is shaped on each side with a coupling portion 20. The lens 2 is fixed to the arm 3 thanks to said coupling portion 20, which is received in a slot 32 (shown with a broken line in Fig. 3) of the front element 31. The lens can be uncoupled by operating a pushbutton 33 mounted on an outer surface 34 of the front element 31, in proximity to the lens.

The coupling portion 20 can be better seen in Fig. 5 and has a female seat 21 essentially C-shaped or omega-shaped. It can be noted in the figure that said seat 21 has an undercut with respect to a direction E-E which is the direction of insertion or extraction of the portion 20 with respect to the slot 32.

The seat 21 is delimited by two small arms 24, 25 of the coupling portion 20 that form an eyelet 23. The seat 21 has an entrance portion 26 that is narrower than the eyelet 23, which determines the mentioned undercut shape. Such a shape makes the seat 21 engageable and disengageable by a coupling element according to an axis perpendicular to the plane of Fig. 5.

The pushbutton 33 acts on a quick coupling and uncoupling system integrated into the front element 31. In the rest position, an elastic element maintains said system in the engaged condition with the lens portion 20 preventing the separation of the lens 2 from the arm 3. By pressing the pushbutton said engagement is released, allowing the lens change.

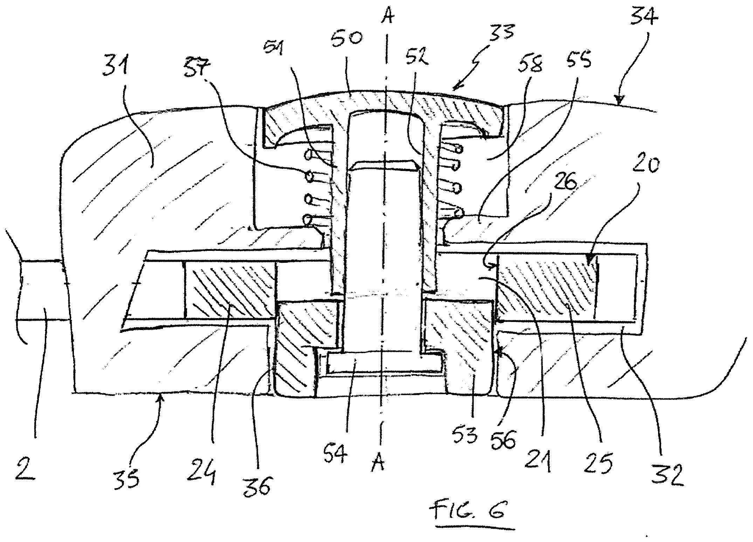

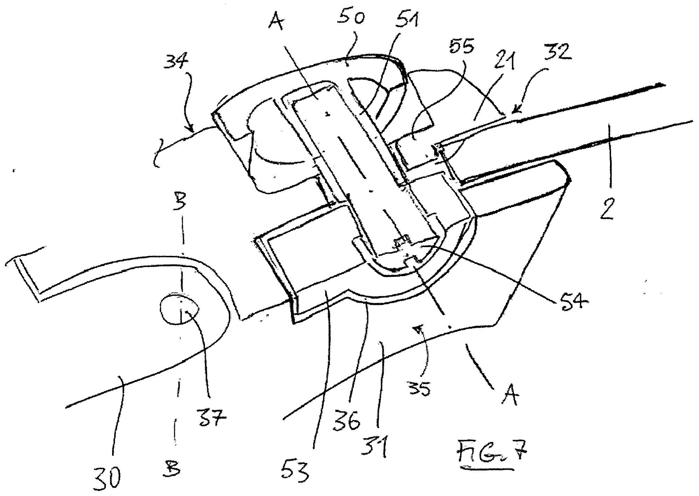

A preferred embodiment of the quick coupling and uncoupling system can be seen in Fig. 6 and 7.

The pushbutton 33 has an essentially mushroom-shaped body and comprises a head 50 and a hollow cylindrical stem 51 with an inner thread 52. A coupling element, adapted to engagement with the described female seat 21, is represented by a stop 53 appropriately shaped to provide a shape coupling with the seat 21 of the lens 2.

Said stop 53 is firmly fixed to the stem 51 of the pushbutton with a screw 54 that passes in a central hole of the stop 53 and that engages the inner thread 52 of the stem 51 itself.

A helical spring 57 is coaxially mounted around the stem 51. Said spring 57 rests against an abutment plane 55 and against the lower surface of the head 50. The abutment plane 55 has a central through hole for the stem 51 as can be noted in the figure. Due to this mounting, the spring 57 tends to keep the pushbutton 33 in a raised position.

The pushbutton 33 can slide in a direction A-A that represents the axis of the stem 51 and of the spring 57, and that can be termed the activation axis of the pushbutton 33.

The pushbutton 33, together with the spring 57, is housed in a cavity 58 and is essentially mounted flush with an outer surface 34 of the front element 31.

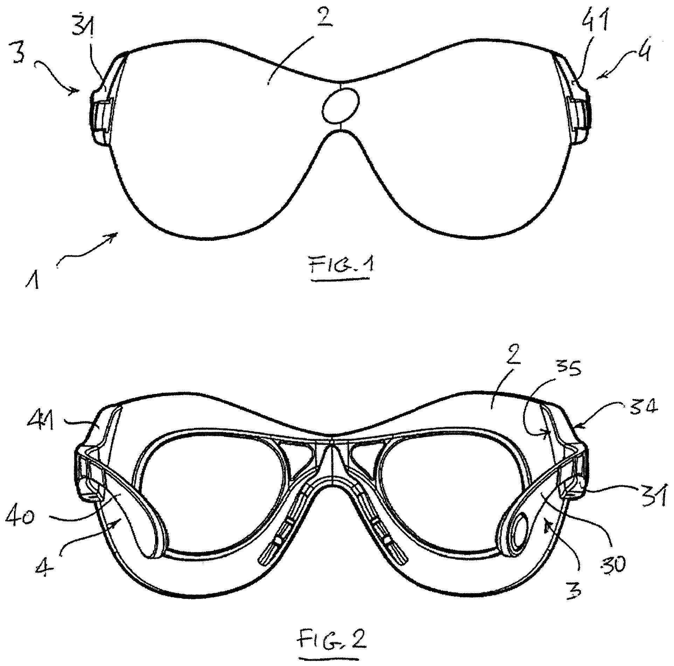

The stop 53 is housed in a seat 36 that is located on an inner surface 35 of the front element 31, opposite the surface 34 where the pushbutton 33 is mounted. Said surfaces 34, 35 are also indicated in Fig. 2 for clarity.

In Figs. 6-7 it can be seen the coupling portion 20 of the lens 2 when received in the slot 32. It can also be noted that the stop 53 has a shape that substantially corresponds to the shape of the seat 21, but with slightly smaller dimensions, so that the stop 53 can engage said seat 21 with a small play.

The shape coupling between the seat 21 and the stop 53 is slidable along the axis A-A of the stop 53 (upwards or downwards in Fig. 6). The stop 53 can thus disengage from the seat 21. The same shape coupling between the seat 21 and the stop 53 is, however, locked in the directions that lie on a plane perpendicular to the axis A-A; therefore, the stop 53, when engaged in the seat 21, prevents the lens 2 from sliding out of the slot 32. It is to be noted that the stop 53 is firmly retained by the fixing of the screw 54 and the coupling with the seat 36 of the front element.

In Fig. 6 and 7 the system is shown in the rest condition. The spring 57 keeps the pushbutton 33 raised at the stroke end and substantially flush with the surface 34; the stop 53 is flush with the opposite surface 35 and engaged with the seat 21. In particular, at least a part of the shoulder 56 of the stop 53 overlaps in contact with the inner surface 26 of the seat 21. This contact maintains the lens 2 in the seat preventing its extraction. The assembly of the pushbutton 33 may abut against an appropriate stroke end stop.

By pressing the pushbutton 33 and overcoming the resistance of the spring 57, the stop 53 is lowered along the axis A-A, exits from the seat 21 thus disengaging from the coupling portion 20 of the lens 2. It is to be noted that the front opening 26 (Fig. 5) of the coupling portion 20 is wider than the diameter of the stem 51 so that it does not hinder the removal of the lens 2.

Some of the details of Fig. 6 are visible, from a different angle, in Fig. 7. In said figure, the hinge 37 and related axis B-B between the front element 31 and the elongated body 30 of the arm 3 can also be seen.

In one embodiment, the coupling portion 20 and the stop 53 can be realized so that by inserting the lens 2 in the slot 32, the contact between said portion 20 and said stop 53 causes a lowering of the mechanism (lowering of the button 33 - stop 53 assembly) and the subsequent snap return, pushed by the spring 57, so as to lock the lens in its seat.

## Claims

1. Eyewear (1) with a quick coupling and uncoupling system between at least one lens (2) and a frame element (31) of the eyewear, wherein the lens (2) has a coupling portion (20) and the frame element (31) comprises:
a slot (32) adapted to receive the coupling portion (20) of the lens,
a pushbutton (33) operable by pushing or releasing along an activation axis (A-A) between a first coupling position and a second uncoupling position,
at least one elastic contrast element (57) associated with the pushbutton and tending to keep the pushbutton in the coupling position,
a lens coupling element (53), which is configured to engage the coupling portion (20) of the lens with a shape coupling,
wherein the coupling element (53) is integral with said pushbutton and said pushbutton acts on the coupling element moving the coupling element along said axis (A-A) and in such a way that:
when the pushbutton is in the first position, the coupling element (53) is engaged with the coupling portion (20) of the lens inside the slot (32), so as to retain the coupling portion of the lens inside the slot and maintain the lens (2) coupled to the frame element (31);
when the pushbutton is in the second position, the coupling element is disengaged from the coupling portion of the lens and allows to separate the lens from the frame element.

2. Eyewear according to one of the preceding claims wherein the coupling element (53) engages and disengages the coupling portion of the lens with a movement in the axial direction (A-A) of activation of the pushbutton.

3. Eyewear according to one of the preceding claims, wherein the shape coupling between the coupling element (53) and the coupling portion of the lens is such as to freely allow a relative displacement in the direction of the activation axis (A-A) of the pushbutton and prevent a relative displacement in directions lying on a plane perpendicular to said axis.

4. Eyewear according to one of the preceding claims wherein the coupling portion (20) of the lens has a shape that defines an undercut with respect to a direction (E-E) of insertion or extraction of the lens into or out of the slot (32).

5. Eyewear according to claim 4, wherein the coupling portion of the lens has a seat (21) with an essentially omega-shape or "V" shape or dovetail shape.

6. Eyewear according to one of the preceding claims, wherein the coupling element (53) is received in a seat (36) obtained in the body of the frame element (31), opposite to the pushbutton, and the coupling element (53) is received in said seat (36) with a shape coupling that enables the movement according to the pushbutton activation axis (A-A) and prevents the movement in directions lying on a plane perpendicular to said axis.

7. Eyewear according to claim 6, wherein the pushbutton is located on a first surface (34) of the frame element (31) and the coupling element (53), inside said seat (36) and with the pushbutton in the release condition, is essentially flush with a second surface (35) of the frame element (31) which is opposite said first surface.

8. Eyewear according to one of the preceding claims wherein the pushbutton (33) comprises a head (50) and a stem (51) and the coupling element (53) is fixed to the stem.

9. Eyewear according to claim 8, wherein the stem (51) is hollow and provided with an inner thread and the coupling element is fixed to the stem through a screw (54) that engages said inner thread.

10. Eyewear according to claim 8 or 9 wherein the elastic contrast element is represented by a helical spring (57) placed between the head of the pushbutton and an abutment plane.

11. Eyewear according to one of the preceding claims wherein the lens is made in a single piece comprising the coupling portions.

12. Eyewear according to one of the preceding claims wherein said frame element (31) is a front element hinged to an arm (30).

13. Eyewear according to one of the preceding claims wherein the pushbutton has an elliptical or essentially elliptical shape.

14. Eyewear according to one of the preceding claims wherein the lens is a single lens and comprises two coupling portions, right and left.
